# EUROPÄISCHE PATENTSCHRIFT

(11) **EP 3 549 738 B1**
(45) Veröffentlichungstag und Bekanntmachung des Hinweises auf die Patenterteilung: **04.05.2022**
(21) Anmeldenummer: 19164231.3
(22) Anmeldetag: 21.03.2019
(51) Int. Cl.: B29B 9/12, B29B 9/06, B01J 2/20, B29C 64/314, B29C 48/00, B29C 48/05, B33Y 40/00, B33Y 70/00, B29C 48/04, B29C 48/14, B29C 48/34

(54) **VERFAHREN ZUR HERSTELLUNG VON KUGELFÖRMIGEN POLYMERPARTIKELN, UND DARAUF BEZOGENE VERWENDUNG**
METHOD FOR MANUFACTURING BALL-SHAPED POLYMER PARTICLES, AND RELATED USE
PROCÉDÉ DE FABRICATION DES PARTICULES POLYMÈRES SPHÉRIQUES, ET UTILISATION ASSOCIÉE

(30) Priorität: 05.04.2018 DE 102018108001
(43) Veröffentlichungstag der Anmeldung: 09.10.2019
(73) Patentinhaber: Lean Plastics Technologies GmbH, 98693 Ilmenau (DE)
(72) Erfinder: DÜNGEN, Matthias, 99094 Erfurt (DE); LANGLOTZ, Martin, 98693 Ilmenau (DE)
(74) Vertreter: Liedtke & Partner Patentanwälte

(56) Entgegenhaltungen:
- WO-A1-2013/138204
- DE-A1-102009 000 147
- DE-A1-102012 015 257
- DE-A1-102012 103 976
- DE-A1-102013 015 190
- US-A1- 2011 107 967
- US-A1- 2017 028 632

## Beschreibung

Die vorliegende Erfindung betrifft ein Verfahren zur Herstellung von kugelförmigen Polymerpartikeln mit einer Teilchengröße von 2 µm bis 200 µm aus thermoplastischen Polymeren (Kunststoffen) umfassend einen kontinuierlichen Extrusionsprozess und einen nachfolgenden Mikrogranulierungsprozess sowie eine dazugehörige Verwendung.

Kunststoffpulver, gebildet aus diesen kugelförmigen Polymerpartikeln, können insbesondere für pulverbasierte additive Fertigungsverfahren (auch bezeichnet als generative Fertigungsverfahren, Rapid Prototyping oder 3D-Druck) verwendet werden. Wesentliche bekannte additive Fertigungsverfahren, die derartige Kunststoffpulver als Rohstoff nutzen, sind das selektive Lasersintern (SLS), wie es beispielweise in WO99/58317A1 offenbart ist, das Binder Jetting, beschrieben in DE60014714T2 oder WO2017/146711A1, verschiedene Ausführungen von Siebdruckverfahren, bekannt z.B. aus DE202013004745U1, oder das High Speed Sintering, offengelegt in EP1648686B2. Allen diesen bekannten Verfahren ist gemein, dass, basierend auf digitalen Daten des herzustellenden Körpers, ein Zusammenhalt zwischen Pulverpartikeln erzeugt wird, so dass der, den vorgegebenen Daten entsprechende Körper, entsteht, ohne dass eine Hilfsform (Gieß- oder Spritzform etc.) benötigt wird.

Die gebräuchliche Handelsform von thermoplastischen Kunststoffen vor ihrer Formgebung ist das Kunststoffgranulat. Kunststoffgranulat hat einen Durchmesser von ca. 1 mm bis 10 mm und ist regelmäßig geformt, typischerweise zylinder- oder linsenförmig. Damit entspricht es nicht den Anforderungen pulverbasierter additiver Fertigungsverfahren, die typischerweise Partikelgrößen kleiner als 100 µm nutzen. Aus dem Stand der Technik sind verschiedene Verfahren zur Herstellung von Kunststoffpulvern bekannt, die diesen Anforderungen an die Partikelgröße entsprechen. Beispielhaft seien hier genannt die Perlpolymerisation (WO99/58317A1), das emulsifizierte Mahlen (DE10122492A1), verschiedene Fällungsverfahren (DE2906647B1), Mahlverfahren, Schmelzsprühverfahren oder die Sprühtrocknung. Letztere bekannt aus EP2115043B1 oder DE20205020596U1.

Aus der DE 10 2012 015 257 A1 ist eine Lochplatte zum Erzeugen von Granulat aus thermoplastischem Kunststoffmaterial bekannt, mit einer Vielzahl von Düsenbohrungen, wobei die Düsenbohrungen in ihrer Länge jeweils so bemessen sind, dass die Düsenbohrungen einen im Wesentlichen gleichen Durchsatz von Schmelzematerial aufweisen.

Aufgabe der vorliegenden Erfindung ist es, ein verbessertes Verfahren zur Herstellung von kugelförmigen Polymerpartikeln, die als Kunststoffpulver für pulverbasierte additive Fertigungsverfahren geeignet sind, bereitzustellen. Kugelförmig bedeutet in diesem Zusammenhang, dass die längsten und kürzesten Außenabmaße eines Partikels (die gemessene Strecke verläuft durch den geometrischen Mittelpunkt des Partikels) sich nicht mehr als um den Faktor 2,5 unterschieden.

Erfindungsgemäß gelingt die Lösung dieser Aufgabe mit den Merkmalen des unabhängigen Verfahrensanspruchs 1 sowie mit denen des unabhängigen Verwendungsanspruchs 6.

Vorteilhafte Ausgestaltungen der erfindungsgemäßen Lösung sind in den Unteransprüchen angegeben.

Die Erfindung wird im Folgenden anhand von Zeichnungen näher erläutert. Die zugehörigen Zeichnungen zeigen:
- Figur 1-: schematische Darstellung eines ersten Ausführungsbeispiels einer Vorrichtung zur Durchführung des erfindungsgemäßen Verfahrens und
- Figur 2-: schematische Darstellung eines Ausschnitts eines zweiten bevorzugten Ausführungsbeispiels einer Vorrichtung zur Durchführung des erfindungsgemäßen Verfahrens.

Mit der vorliegenden Erfindung wird vorgeschlagen, kugelförmige Polymerpartikel für pulverbasierte additive Fertigungsverfahren mit einem Verfahren herzustellen, welches auf einem kontinuierlich laufenden Extrusionsprozess und einem nachgeschalteten Mikrogranulierprozess basiert.

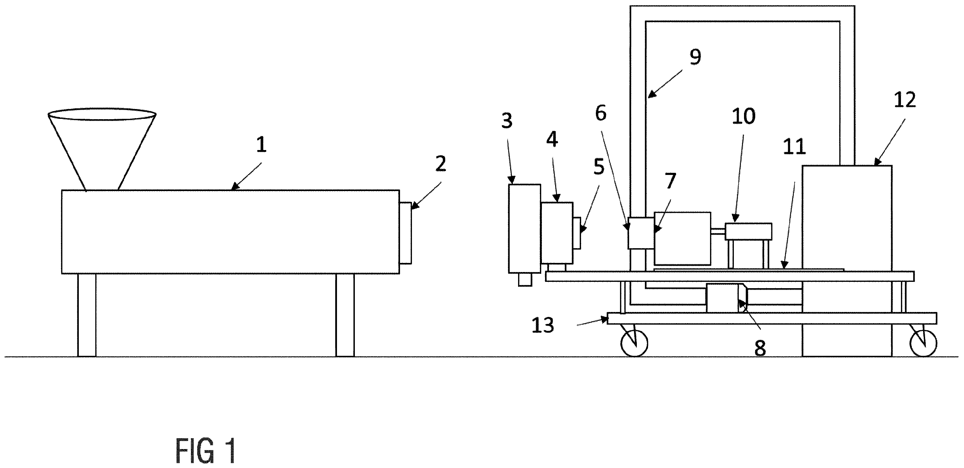

In Figur 1 ist ein erstes Ausführungsbeispiel einer dazugehörigen Vorrichtung zur Herstellung derartiger kugelförmiger Polymerpartikel dargestellt. Sie umfasst eine Extrusionseinheit (1) und eine Granuliervorrichtung.

In der Extrusionseinheit (1), vorzugsweise ein Einschneckenextruder, wobei auch die Verwendung eines Mehrwellenextruders denkbar ist, werden ein oder mehrere thermoplastische Polymere (Kunststoffe) aufgeschmolzen, ggf. mit weiteren Materialien (Farbstoffe, Füll- oder Verstärkungsmaterialien, usw.) vermischt und der für die nachfolgende Granulierung erforderliche Druck aufgebaut. Die Granuliervorrichtung umfasst ein Anfahrventil (3), eine Lochplatte mit Zulaufkanälen (4) und eine Granulierkammer (6) mit einem anschließbaren, rotierbar gelagerten Messerkopf (7). Der Messerkopf (7) wird über einen Granulatorantrieb (10) angetrieben.

Die Lochplatte (4) ist mit einer Vielzahl von Bohrungen mit einem Durchmesser zwischen 2 µm und 200 µm versehen. Die von der Extrusionseinheit (1) über das Anfahrventil (3) zur Lochplatte (4) geförderte Schmelze wird durch diese Löcher über Düsenkörper (bekannt aus der AT509088A1) in mehrere, 2 µm bis 200 µm starke Schmelzstränge geformt. Die Düsenkörper können Single-Hole- oder Multi-Hole-Einsätze sein. Bei einem Single-Hole-Einsatz wird aus einem Zulaufkanal lediglich ein Strang geformt. Im Gegensatz dazu werden bei dem Multi-Hole-Einsatz aus einem Zulaufkanal beliebig viele Schmelzstränge geformt. Hinter der Lochplatte (4) werden diese Schmelzstränge in der Granulierkammer (6) mit Hilfe des darin gelagerten, koaxial zur Lochplatte (4) rotierenden Messerkopfes (7) geschnitten, wodurch kleine Partikel, auch Mikrogranulat genannt, entstehen. Das entstehende Mikrogranulat weist eine gleichmäßige, geschlossene Oberfläche auf. Zur Realisierung einer möglichst kugelförmigen Mikrogranulatkornform muss die Länge der abgeschnittenen Stränge gleich ihrem Durchmesser sein, d.h. näherungsweise dem Lochdurchmesser der Lochplatte entsprechen.

Das entstandene Mikrogranulat wird in einem die Granulierkammer (6) durchströmenden Kühl- und Fördermedium (8) erstarrt und zusammen mit dem Kühl- und Fördermedium (8) aus der Granulierkammer (6) gefördert. Anschließend wird es aus dem üblicherweise im Kreislauf (9) geführten Kühl- und Fördermedium (8) abgeschieden. Als Kühl- und Fördermedien (8) kommen insbesondere Luft oder Wasser zum Einsatz, und zwar unter anderem in Abhängigkeit vom eingesetzten Kunststoff. Nach dem Stand der Technik ist bekannt, dass für verschiedene Kunststoffe gesonderte Granuliervorrichtungen für eine Trocken- oder Nassgranulierung zum Einsatz kommen.

Um die Temperatur der von dem Extruder angeförderten und in eine Vielzahl von Strängen aufgeteilten Kunststoffschmelze im Bereich der Lochplatte (4) zu kontrollieren, ist aus der DE2814113A1 bekannt, die Lochplatte (4) von einer mit einem Kühlmedium (Luft oder Wasser) in kontakttretenden Laufplatte (5) thermisch zu trennen und die die Lochplatte (4) durchsetzenden Kunststoffstränge mit Hilfe eines sie koaxial umschließenden Kühlmittels zu kühlen. Mit der vorliegenden Erfindung wird vorgeschlagen, dass eine vorteilhafte Ausführung der Vorrichtung zur Durchführung des erfindungsgemäßen Verfahrens eine Laufplatte (5) umfasst, die zusätzlich temperiert wird. Eine weitere Temperaturkontrolle ist zielführend, wenn die Laufplatte (5) eine andere Temperatur als die Lochplatte (4) aufweist. Die zusätzliche Temperierung der Laufplatte (5) kann als Fluidtemperierung ausgeführt sein, wobei die Laufplatte (5) mit Kanälen durchsetzt ist, durch die ein geeignetes Temperiermedium (z.B. Wasser, Öl) gepumpt wird, welches Wärme abgibt oder aufnimmt. Insbesondere kann die Senkung der Temperatur der Laufplatte (5) zu einer Verbesserung der Gleichmäßigkeit der Form der hergestellten Pulverpartikel beitragen.

Die Wartung einer solchen Granuliervorrichtung bedingt ein axiales Trennen der Lochplatte (4) von der Laufplatte (5). Dies kann mit Hilfe von axialen Stellzylindern zwischen diesen beiden Platten realisiert werden. Die Laufplatte (5) mit der angeschlossenen Granulierkammer (6) und dem Messerkopf (7) wird zu diesem Zweck auf einem fahrbaren Gestell (13) angeordnet.

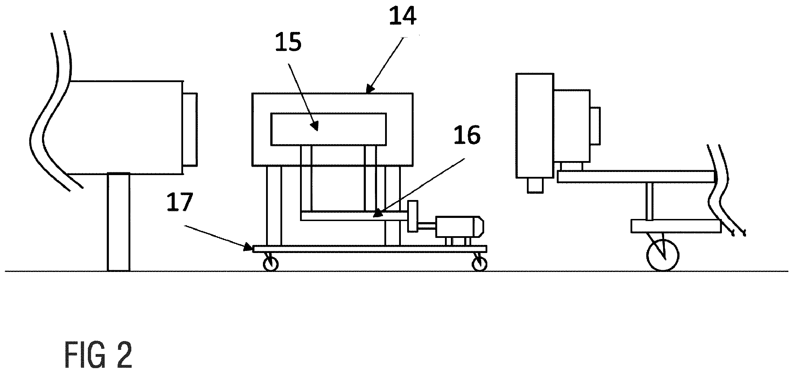

Eine weitere, besonders vorteilhafte Ausführung der Vorrichtung zur Durchführung des erfindungsgemäßen Verfahrens umfasst eine Vorrichtung zur Schwingungsanregung der Schmelze, die zwischen der Extrusionseinheit (1) und der Granuliervorrichtung angeordnet ist und einen Hohlzylinder (14) und einen in diesem positionierten zweiten Zylinder (15) aufweist, wobei der zweite Zylinder (15) von einer Vibrationseinheit (16) mit einer Schwingung beaufschlagbar ist. Prinzipiell ist aus GB2046167A bekannt, dass die zeitlich begrenzt ausgeführte schwingende Anregung von Kunststoffschmelzen zur Veränderung diverser Eigenschaften (wie Viskosität, Wärmekapazität) führen. Um die Extrusion durch die Düsen der Lochplatte (4) mit der vorliegenden Erfindung zu erleichtern, ist die Veränderung der Viskosität, vornehmlich ihre Senkung, relevant. Eine derartige Schwingungsanregung kann beispielsweise mit Hilfe eines wie in Figur 2 dargestellten Aufbaus erfolgen. Die Schmelze wird durch den Hohlzylinder (14) gepresst, in welchem sich der zweite Zylinder (15) befindet, der mittels der Vibrationseinheit (16) mit einer Schwingung beaufschlagt wird und diese Schwingung auf die Schmelze überträgt. Es hat sich als vorteilhaft erwiesen, Schwingungsfrequenzen zwischen 0,1 Hz und 50 Hz einzusetzen, wobei Schwingungsamplituden kleiner 1% des Spaltmaßes zwischen dem Hohlzylinder (14) und zweiten Zylinder (15) ausreichend sind. Außerdem hat sich gezeigt, dass eine Schwingungs-Anregungsdauer von 3 Minuten bis 60 Minuten zielführend ist. Die Anregungsdauer im kontinuierlichen Extrusionsbetrieb wird dadurch realisiert, dass das von Schmelze durchflossene Volumen des Hohlzylinders (14) so dimensioniert wird, dass die mittlere Verweilzeit (Verhältnis von Hohlzylindervolumen zu Volumenstrom) im Bereich der genannten Anregungsdauer liegt.

Aus dem Stand der Technik sind Granuliervorrichtungen mit einem Schmelzedurchsatz pro Loch der Lochplatte (kurz: Lochdurchsatz) von 0,5 kg/h bis 2 kg/h bekannt. Diese Parameterwahl begründet sich damit, dass die Lochplatte einseitig von einem Fluid (in der Regel Wasser) und folglich auch die darin befindliche Schmelze abgekühlt wird. Mit einem möglichst hohen Lochdurchsatz kann gewährleistet werden, dass einerseits die Verweilzeit im abgekühlten Loch so gering ist, dass die Schmelze nicht erstarrt und andererseits der Wärmestrom, den die Schmelze an die Lochplatte abgibt so groß ist, dass die Lochplatte nicht zu stark abkühlt. Eine weitere Steigerung des Lochdurchsatzes bedingt eine Erhöhung des erforderlichen Drucks der Schmelze zum Passieren der Lochplatte. Dieser Druck ist aber mit der Pumpleistung der vorgelagerten Extrusionseinheit (Extruder, Schmelzepumpe) und der zulässigen Durchbiegung der Lochplatte limitiert. Eine zu große Durchbiegung der Lochplatte kann den nachfolgenden Schneidvorgang nachteilig beeinflussen. Zudem stellt das mechanische Versagen der Lochplatte einen weiteren limitierenden Faktor dar.

Außerdem dient auch die Kennzahl "mittlere Austrittsgeschwindigkeit pro Loch" dem Vergleich von Granulierprozessen. Diese Kennzahl ermittelt sich aus dem mittleren Volumenstrom pro Loch über die Querschnittsfläche des Lochs. Im Rahmen umfangreicher Untersuchungen hat sich herausgestellt, dass die in den Tabellen 1 bis 4 angegebenen Parameterkombinationen für die Herstellung von kugelförmigen Polymerpartikeln gut geeignet sind.

Des Weiteren ist bei den bekannten Granuliervorrichtungen die Schnittfrequenz am Loch eine Kennzahl, um den Granulierprozess zu beschreiben. Die Schnittfrequenz am Loch gibt an, wie viele Schnitte pro Sekunde durch die rotierenden Messer an einem Lochausgang durchgeführt werden. Die Schnittfrequenz am Loch entspricht also der Drehzahl des Messerkopfes multipliziert mit der Messeranzahl. Sowohl die maximale Messeranzahl als auch die Rotationsgeschwindigkeit des Messerkopfes sind im Stand der Technik limitiert. Unterwassergranulierungen werden in der Regel mit maximalen Drehzahlen des Granulatorantrieb (10) von 6.000 U/min durchgeführt. Auf Grund des benötigten Platzes der Messer über den Umfang ist der Messerkopf mit maximal 16 Messern bestückt, d. h. es kann eine maximale Schnittfrequenz von 1600 Hz realisiert werden. Der geringste Lochdurchmesser im Stand der Technik beträgt derzeit 400 µm.

Polymerpartikel, hergestellt mit einem erfindungsgemäßen Verfahren, können partikelförmige funktionale Zusatzstoffe, wie z.B. Hilfsstoffe (z.B. Rieselstoffe) und / oder Füllstoffe (z.B. Glaspartikel, Carbonfasern, Keramikfasern, Borfasern, Naturfasern (Sisal, Hanf, Spreu) und / oder Aluminiumgries) und / oder Pigmente (z.B. Interferenzpigmente) und / oder Absorber (z.B. Farbstoffe, hydrophilisierte oder hydrophobisierte Rußpartikel, KHP, Knochenkohle, Graphit, Kohlenstofffasern, Kreide oder Flammschutzmittel basierend auf Phosphor oder Melamincyanurat) aufweisen, die der Schmelze aus dem oder den teilkristallinen thermoplastischen Polymeren im Extrusionsprozess hinzugefügt werden, wobei deren Abmaße kleiner als die Abmaße der Polymerpartikel sind, so dass die Polymerpartikel die Zusatzstoffpartikel zumindest teilweise umhüllen.

In einer Ausführungsform der Erfindung wird unter einer Laufplatte 5 eine Platte verstanden, auf welcher Schnittkanten der Messer rotieren und dadurch die Stränge der Schmelze schneiden; die Messer laufen auf der Laufplatte 5. Die Laufplatte 5 kann identisch sein mit der Lochplatte 4, insbesondere wenn keinerlei Isolation vorliegt. In einer Ausführungsform ist eine Isolation vorgesehen, wobei die Laufplatte 5 insbesondere großflächig mit Luftkammern vom Rest des Extrusionswerkzeugs thermisch isoliert ist. Die vom restlichen Extrusionswerkzeug, insbesondere der Lochplatte 4, isolierte Laufplatte 5 kann temperierbar sein. Durch die hohe Schnittfrequenz kann eine hohe Reibleistung an der Laufplatte 5 entstehen, so dass die Laufplatte 5, abhängig auch vom verwendeten Kühlmedium, beispielsweise Wasser oder ein Fluid mit einer geringeren Wärmekapazität wie z.B. Luft, sehr heiß werden und dadurch den Schnitt beeinflussen und schnell verschleißen kann. Eine, insbesondere vom Rest des Extrusionswerkzeugs unabhängige, Temperierung der Laufplatte 5 ermöglicht dann, auf dieses Temperaturfeld gezielt Einfluss zu nehmen.

Für kugelförmige Polymerpartikel mit einer Größe von 2 µm bis 20 µm

**Tabelle 1**

| Schnittfrequenz am Lochausgang [kHz] | max. | min |
|---|---|---|
| | Stranggeschwindigkeit [m/s] | Stranggeschwindigkeit m/s] |
| >8 bis 16 | 0,05000000 | 0,00002076 |
| >4 bis 8 | 0,02500000 | 0,00001038 |
| >2 bis 4 | 0,01250000 | 0,00000519 |
| >1 bis 2 | 0,00625000 | 0,00000259 |
| >0,5 bis 1 | 0,00312500 | 0,00000130 |
| >0,25 bis 0,5 | 0,00156250 | 0,00000065 |
| >0,1 bis 0,25 | 0,00078125 | 0,00000032 |

Für kugelförmige Polymerpartikel mit einer Größe von >20 µm bis 50 µm

**Tabelle 2**

| Schnittfrequenz am Lochausgang [kHz] | max. | min |
|---|---|---|
| | Stranggeschwindigkeit [m/s] | Stranggeschwindigkeit [m/s] |
| >8 bis 16 | 0,50000000 | 0,00021107 |
| >4 bis 8 | 0,25000000 | 0,00010553 |
| >2 bis 4 | 0,12500000 | 0,00005277 |
| >1 bis 2 | 0,06250000 | 0,00002638 |
| >0,5 bis 1 | 0,03125000 | 0,00001319 |
| >0,25 bis 0,5 | 0,01562500 | 0,00000660 |
| >0,1 bis 0,25 | 0,00781250 | 0,00000330 |

Für kugelförmige Polymerpartikel mit einer Größe von >50 µm bis 100 µm

**Tabelle 3**

| Schnittfrequenz am Lochausgang [kHz] | | max. Stranggeschwindigkeit [m/s] | min Stranggeschwindigkeit [m/s] |
|---|---|---|---|
| | >8 bis 16 | 1,10000000 | 0,00268088 |
| | >4 bis 8 | 0,55000000 | 0,00134044 |
| | >2 bis 4 | 0,27500000 | 0,00067022 |
| | >1 bis 2 | 0,13750000 | 0,00033511 |
| | >0,5 bis 1 | 0,06875000 | 0,00016755 |
| | >0,25 bis 0,5 | 0,03437500 | 0,00008378 |
| | >0,1 bis 0,25 | 0,01718750 | 0,00004189 |

Für kugelförmige Polymerpartikel mit einer Größe von >100 µm bis 200 µm

**Tabelle 4**

| Schnittfrequenz am Lochausgang [kHz] | | max. Stranggeschwindigkeit [m/s] | min Stranggeschwindigkeit [m/s] |
|---|---|---|---|
| | >8 bis 16 | 3,00000000 | 1,10000000 |
| | >4 bis 8 | 1,50000000 | 0,55000000 |
| | >2 bis 4 | 0,75000000 | 0,27500000 |
| | >1 bis 2 | 0,37500000 | 0,13750000 |
| | >0,5 bis 1 | 0,18750000 | 0,06875000 |
| | >0,25 bis 0,5 | 0,09375000 | 0,03437500 |
| | >0,1 bis 0,25 | 0,04687500 | 0,01718750 |

### Bezugszeichenliste

- 1 -: Extrusionseinheit
- 2 -: Adapter für Nachfolgeeinrichtungen
- 3 -: Anfahrventil
- 4 -: Lochplatte mit Zulaufkanälen
- 5 -: Laufplatte
- 6 -: Granulierkammer
- 7 -: Messerkopf
- 8 -: Fluidtransportmittel (Pumpe oder Gebläse)
- 9 -: Fluidkreislauf (Wasser, Luft, Öl)
- 10 -: Granulatorantrieb
- 11 -: Verstellschiene zum Zustellen der Granulierung an die Laufplatte
- 12 -: Trockner
- 13 -: Gestell
- 14 -: erster Hohlzylinder
- 15 -: zweiter Zylinder
- 16 -: Vibrationseinheit
- 17 -: Gestell für Vibrationseinheit

## Patentansprüche

1. Verfahren zur Herstellung von kugelförmigen Polymerpartikeln mit einer Teilchengröße von 2 µm bis 200 µm aus thermoplastischen Polymeren, umfassend einen kontinuierlichen Extrusionsprozess und einen nachfolgenden Mikrogranulierungsprozess, wobei der Mikrogranulierungsprozess mit einer Austrittsgeschwindigkeit am Loch und einer Schnittfrequenz am Lochaustritt einer Lochplatte (4), die Schmelze-Austrittsbohrungen mit einem Durchmesser von 2 µm bis 200 µm aufweist, gemäß folgender Tabelle realisiert wird:
| Für kugelförmige Polymerpartikel mit einer Größe von 2 µm bis 20 µm | | |
|---|---|---|
| Schnittfrequenz am Lochausgang [kHz] | max. Austrittsgeschwindigkeit [m/s] | min. Austrittsgeschwindigkeit [m/s] |
| >8 bis 16 | 0,05000000 | 0,00002076 |
| >4 bis 8 | 0,02500000 | 0,00001038 |
| >2 bis 4 | 0,01250000 | 0,00000519 |
| >1 bis 2 | 0,00625000 | 0,00000259 |
| >0,5 bis 1 | 0,00312500 | 0,00000130 |
| >0,25 bis 0,5 | 0,00156250 | 0,00000065 |
| >0,1 bis 0,25 | 0,00078125 | 0,00000032 |
| Für kugelförmige Polymerpartikel mit einer Größe von >20 µm bis 50 µm | | |
|---|---|---|
| >8 bis 16 | 0,50000000 | 0,00021107 |
| >4 bis 8 | 0,25000000 | 0,00010553 |
| >2 bis 4 | 0,12500000 | 0,00005277 |
| >1 bis 2 | 0,06250000 | 0,00002638 |
| >0,5 bis 1 | 0,03125000 | 0,00001319 |
| >0,25 bis 0,5 | 0,01562500 | 0,00000660 |
| >0,1 bis 0,25 | 0,00781250 | 0,00000330 |
| Für kugelförmige Polymerpartikel mit einer Größe von >50 µm bis 100 µm | | |
|---|---|---|
| >8 bis 16 | 1,10000000 | 0,00268088 |
| >4 bis 8 | 0,55000000 | 0,00134044 |
| >2 bis 4 | 0,27500000 | 0,00067022 |
| >1 bis 2 | 0,13750000 | 0,00033511 |
| >0,5 bis 1 | 0,06875000 | 0,00016755 |
| >0,25 bis 0,5 | 0,03437500 | 0,00008378 |
| >0,1 bis 0,25 | 0,01718750 | 0,00004189 |
| Für kugelförmige Polymerpartikel mit einer Größe von >100 µm bis 200 µm | | |
|---|---|---|
| >8 bis 16 | 3,00000000 | 1,10000000 |
| >4 bis 8 | 1,50000000 | 0,55000000 |
| >2 bis 4 | 0,75000000 | 0,27500000 |
| >1 bis 2 | 0,37500000 | 0,13750000 |
| >0,5 bis 1 | 0,18750000 | 0,06875000 |
| >0,25 bis 0,5 | 0,09375000 | 0,03437500 |
| >0,1 bis 0,25 | 0,04687500 | 0,01718750 |

2. Verfahren nach Anspruch 1, wobei der Mikrogranulierungsprozess mit Hilfe einer Granuliervorrichtung mit einem rotierenden Messerkopf (7) realisiert wird und der Messerkopf (7) mit mindestens 10.000 Umdrehungen pro Minute rotiert.

3. Verfahren nach Anspruch 1 oder 2, wobei die thermoplastischen Polymere vor der Extrusion durch eine Lochplatte (4) der Granuliervorrichtung aufgeschmolzen und mit einer Schwingung beaufschlagt werden, wobei die Schwingung mit einer Frequenz von 0,1 Hz bis 50 Hz und einer Dauer von 3 bis 60 Minuten angeregt wird.

4. Verfahren nach einem der Ansprüche 1 bis 3, wobei der Schmelze aus den thermoplastischen Polymeren funktionale Zusatzstoffe in Partikelform beigefügt werden.

5. Verfahren nach Anspruch 4, wobei als die partikelförmigen funktionalen Zusatzstoffe Hilfsstoffe und / oder Füllstoffe und / oder Pigmente und / oder Absorber verwendet werden, deren Abmaße kleiner als die Abmaße der Polymerpartikel sind, so dass die Polymerpartikel die Zusatzstoffpartikel zumindest teilweise umhüllen.

6. Verwendung von Polymerpulver aus Polymerpartikeln, hergestellt mittels des Verfahrens nach Anspruch 5, für additive Fertigungsverfahren.

## Claims

1. Method for producing spherical polymer particles having a particle size of 2 µm to 200 µm from thermoplastic polymers, comprising a continuous extrusion process and a subsequent micro-granulation process, wherein the micro-granulation process is realized with an output velocity at the hole and a cutting-off frequency at the hole outlet of a perforated plate (4), which comprises melt outlet bores having a diameter of 2 µm to 200 µm, according to the following table:
| For spherical polymer particles having a size of 2 µm to 20 µm | | |
|---|---|---|
| Cutting-off frequency at the hole exit [kHz] | max. output velocity [m/s] | min. output velocity [m/s] |
| >8 to 16 | 0.05000000 | 0.00002076 |
| >4 to 8 | 0.02500000 | 0.00001038 |
| >2 to 4 | 0.01250000 | 0.00000519 |
| >1 to 2 | 0.00625000 | 0.00000259 |
| >0.5 to 1 | 0.00312500 | 0.00000130 |
| >0.25 to 0.5 | 0.00156250 | 0.00000065 |
| >0.1 to 0.25 | 0.00078125 | 0.00000032 |
| For spherical polymer particles having a size of >20 µm to 50 µm | | |
|---|---|---|
| >8 to 16 | 0.50000000 | 0.00021107 |
| >4 to 8 | 0.25000000 | 0.00010553 |
| >2 to 4 | 0.12500000 | 0.00005277 |
| >1 to 2 | 0.06250000 | 0.00002638 |
| >0.5 to 1 | 0.03125000 | 0.00001319 |
| >0.25 to 0.5 | 0.01562500 | 0.00000660 |
| >0.1 to 0.25 | 0.00781250 | 0.00000330 |
| For spherical polymer particles having a size of >50 µm to 100 µm | | |
|---|---|---|
| >8 to 16 | 1.10000000 | 0.00268088 |
| >4 to 8 | 0.55000000 | 0.00134044 |
| >2 to 4 | 0.27500000 | 0.00067022 |
| >1 to 2 | 0.13750000 | 0.00033511 |
| >0.5 to 1 | 0.06875000 | 0.00016755 |
| >0.25 to 0.5 | 0.03437500 | 0.00008378 |
| >0.1 to 0.25 | 0.01718750 | 0.00004189 |
| For spherical polymer particles having a size of >100 µm to 200 µm | | |
|---|---|---|
| >8 to 16 | 3.00000000 | 1.10000000 |
| >4 to 8 | 1.50000000 | 0.55000000 |
| >2 to 4 | 0.75000000 | 0.27500000 |
| >1 to 2 | 0.37500000 | 0.13750000 |
| >0.5 to 1 | 0.18750000 | 0.06875000 |
| >0.25 to 0.5 | 0.09375000 | 0.03437500 |
| >0.1 to 0.25 | 0.04687500 | 0.01718750 |

2. Method according to Claim 1, wherein the microgranulation process is realized using a granulating device with a rotating blade head (7) and the blade head (7) rotates at least at 10 000 revolutions per minute.

3. Method according to Claim 1 or 2, wherein, prior to being extruded through a perforated plate (4) of the granulating device, the thermoplastic polymers are melted and have an oscillation applied to them, wherein the oscillation is excited at a frequency of 0.1 Hz to 50 Hz and a duration of 3 to 60 minutes.

4. Method according to one of Claims 1 to 3, wherein functional additives in particle form are added to the thermoplastic-polymer melt.

5. Method according to Claim 4, wherein the particulate functional additives used are auxiliaries and/or fillers and/or pigments and/or absorbers having dimensions which are smaller than the dimensions of the polymer particles, with the result that the polymer particles at least partially encapsulate the additive particles.

6. Use of polymer powder composed of polymer particles, produced by means of the method according to Claim 5, for additive manufacturing methods.

## Revendications

1. Procédé de fabrication de particules polymères sphériques ayant une granulométrie de 2 µm à 200 µm à partir de polymères thermoplastiques, comprenant un procédé continu d'extrusion et un procédé de microgranulation subséquent, le procédé de microgranulation étant mis en œuvre à une vitesse de sortie au niveau du trou et à une vitesse de coupe à la sortie du trou d'une plaque perforée (4), qui présente des trous de sortie de la masse fondue ayant un diamètre de 2 µm à 200 µm, conformément au tableau ci-après :
| Pour des particules polymères sphériques de granulométrie 2 µm à 20 µm | | |
|---|---|---|
| Fréquence de coupe en sortie du trou [kHz] | Vitesse maximale de sortie [m/s] | Vitesse minimale de sortie [m/s] |
| > 8 à 16 | 0,05000000 | 0,00002076 |
| > 4 à 8 | 0,02500000 | 0,00001038 |
| > 2 à 4 | 0,01250000 | 0,00000519 |
| > 1 à 2 | 0,00625000 | 0,00000259 |
| > 0,5 à 1 | 0,00312500 | 0,00000130 |
| > 0,25 à 0,5 | 0,00156250 | 0,00000065 |
| > 0,1 à 0,25 | 0,00078125 | 0,00000032 |
| Pour des particules polymères sphériques ayant une granulométrie de > 20 µm à 50 µm | | |
|---|---|---|
| > 8 à 16 | 0,50000000 | 0,00021107 |
| > 4 à 8 | 0,25000000 | 0,00010553 |
| > 2 à 4 | 0,12500000 | 0,00005277 |
| > 1 à 2 | 0,06250000 | 0,00002638 |
| > 0,5 à 1 | 0,03125000 | 0,00001319 |
| > 0,25 à 0,5 | 0,01562500 | 0,00000660 |
| > 0,1 à 0,25 | 0,00781250 | 0,00000330 |
| Pour les particules polymères sphériques ayant une granulométrie de > 50 µm à 100 µm | | |
|---|---|---|
| > 8 à 16 | 1,10000000 | 0,00268088 |
| > 4 à 8 | 0,55000000 | 0,00134044 |
| > 2 à 4 | 0,27500000 | 0,00067022 |
| > 1 à 2 | 0,13750000 | 0,00033511 |
| > 0,5 à 1 | 0,06875000 | 0,00016755 |
| > 0,25 à 0,5 | 0,03437500 | 0,00008378 |
| > 0,1 à 0,25 | 0,01718750 | 0,00004189 |
| Pour les particules polymères sphériques ayant une granulométrie de > 100 µm à 200 µm | | |
|---|---|---|
| > 8 à 16 | 3,00000000 | 1,10000000 |
| > 4 à 8 | 1,50000000 | 0,55000000 |
| > 2 à 4 | 0,75000000 | 0,27500000 |
| > 1 à 2 | 0,37500000 | 0,13750000 |
| > 0,5 à 1 | 0,18750000 | 0,06875000 |
| > 0,25 à 0,5 | 0,09375000 | 0,03437500 |
| > 0,1 à 0,25 | 0,04687500 | 0,01718750 |

2. Procédé selon la revendication 1, dans lequel le procédé de microgranulation est mis en œuvre à l'aide d'un dispositif de granulation ayant une tête de coupe rotative (7), et la tête de coupe (7) tourne à au moins 10 000 tours/minute.

3. Procédé selon la revendication 1 ou 2, dans lequel les polymères thermoplastiques sont portés à fusion avant l'extrusion à travers une plaque perforée (4) du dispositif de granulation et sont soumis à une oscillation, l'oscillation étant réalisée avec une fréquence de 0,1 Hz à 50 Hz pour une durée de 3 à 60 minutes.

4. Procédé selon l'une des revendications 1 à 3, dans lequel la masse fondue constituée des polymères thermoplastiques est additionnée d'additifs fonctionnels sous forme de particules.

5. Procédé selon la revendication 4, dans lequel on utilise en tant qu'additifs fonctionnels sous forme de particules des adjuvants et/ou des charges et/ou des pigments et/ou des absorbants, dont les dimensions sont inférieures aux dimensions des particules polymères, de sorte que les particules polymères entourent au moins partiellement les particules d'additifs.

6. Utilisation de poudres polymères constituées de particules polymères fabriquées par le procédé selon la revendication 5, pour des procédés de fabrication additive.
